# EUROPEAN PATENT SPECIFICATION

(11) **EP 2 669 724 B1**
(45) Date of publication and mention of the grant of the patent: **21.12.2016**
(21) Application number: 11856918.5
(22) Date of filing: 24.01.2011
(51) Int. Cl.: G02B 6/255, B23K 9/00

(54) **OPTICAL FIBER FUSION CONNECTOR**
GLASFASER-FUSIONSSTECKER
CONNECTEUR POUR FUSION DE FIBRES OPTIQUES

(43) Date of publication of application: 04.12.2013
(73) Proprietor: Fujikura Co., Ltd., Tokyo 135-8512 (JP)
(72) Inventor: KAWASAKI, Hiroyuki, Sakura-shi Chiba 285-8550 (JP); YOSHIDA, Kazuyuki, Sakura-shi Chiba 285-8550 (JP); YOKOTA, Kouichi, Sakura-shi Chiba 285-8550 (JP); KAWANISHI, Noriyuki, Sakura-shi Chiba 285-8550 (JP)
(74) Representative: Grünecker Patent- und Rechtsanwälte PartG mbB
(86) International application number: PCT/JP2011/051166
(87) International publication number: WO 2012/101732

(56) References cited:
- EP-A1- 0 281 901
- EP-A2- 1 347 320
- JP-A- 6 109 943
- JP-A- 6 109 943
- JP-A- 2000 137 135
- JP-A- 2003 337 235
- JP-B1- 4 484 958
- US-A- 5 849 173

## Description

### TECHNICAL FIELD

The present invention relates to an optical fiber fusion splicer for fusing and splicing end faces of optical fibers by means of electric discharge generated by supplying electricity to a pair of electrodes.

### BACKGROUND ART

To splice end faces of two optical fibers, it is usual to use arc discharge generated by supplying electricity to two electrodes having a predetermined gap therebetween so as to fuse and splice the end faces of the optical fibers by its high thermal energy.

Structures disclosed in the PTL 1 and the PTL 2 are for example proposed as an optical fiber fusion splicer.

### [Citation List]

### [Patent Literature]

[PTL 1]: Japanese Patent Application Laid-open No. 2005-234555.
[PTL 2]: Japanese Patent Application Laid-open No. H11-316315 .

JP-A-6109943 relates to a discharge electrode fixing structure for a fusing machine and discloses all of the features in the preamble of claim 1.

EP-A2-1347320 relates to a method and an apparatus for expanding the mode field diameter of an optical fiber. This document discloses a cooling means to prevent a burner from being overheated.

### DISCLOSURE OF INVENTION

### PROBLEM TO BE SOLVED

It is often observed that tips of electrodes gradually wear as electric discharge is repeated. The electrode lifetime is determined by the degree of wear of the electrode tips.

The present invention is intended to provide an optical fusion splicer capable of elongating the electrode lifetime.

### MEANS FOR SOLVING PROBLEM

According to an aspect of the present invention, a device for applying electric discharge is provided as set forth in claim 1.

### ADVANTAGEOUS EFFECTS OF INVENTION

According to the present invention, means for suppressing temperature increase of electrodes suppresses oxidization and wear of tips of the electrodes, thereby elongating the electrode lifetime.

### BRIEF DESCRIPTION OF DRAWINGS

FIG. 1 is a perspective view of an optical fiber fusion splicer of the present embodiment.
FIG. 2 is a side view of an electrode used in the optical fiber fusion splicer of the present embodiment.
FIG. 3 is a side view of an electrode used in an optical fiber fusion splicer of the prior art, wherein FIG. 3 (a) shows an example in that a diameter is 2mm and an apical angle of an electrode tip is 30 degrees, and FIG. 3 (b) shows an example in that a diameter is 3mm and an apical angle of an electrode tip is 30 degrees.
FIG. 4 (a) is an enlarged side view of an essential part, which shows a state of oxidization of the electrode tip shown in FIG. 2 in a case where the number of times of electric discharge is 10, and FIG. 4(b) is an enlarged side view of an essential part, which shows a state of oxidization of the electrode tip shown in FIG. 2 in a case where the number of times of electric discharge is 50.
FIG. 5 (a) is an enlarged side view of an essential part, which shows a state of oxidization of the electrode tip shown in FIG. 3(a) in a case where the number of times of electric discharge is 10, and FIG. 5(b) is an enlarged side view of an essential part, which shows a state of oxidization of the electrode tip shown in FIG. 3(a) in a case where the number of times of electric discharge is 50.
FIG. 6(a) is an enlarged side view of an essential part, which shows a state of oxidization of the electrode tip shown in FIG. 3(b) in a case where the number of times of electric discharge is 10, and FIG. 6(b) is an enlarged side view of an essential part, which shows a state of oxidization of the electrode tip shown in FIG. 3(b) in a case where the number of times of electric discharge is 50.
FIG. 7(a) is a drawing showing part subject to temperature measurement in the optical fiber fusion splicer with heat radiation fins, and FIG. 7(b) is a drawing showing part subject to temperature measurement in the optical fiber fusion splicer without heat radiation fins.
FIG. 8(a) is an enlarged side view of an essential part, which shows a state of oxidization of the electrode tip shown in FIG. 2 in a case where an electrode pressing member without heat radiation fins is used and the number of times of electric discharge is 10, and FIG. 8(b) is an enlarged side view of an essential part, which shows a state of oxidization of the electrode tip shown in FIG. 2 in a case where an electrode pressing member with heat radiation fins is used and the number of times of electric discharge is 10.
FIG. 9 is a property graph showing results of temperature measurement at some parts of the electrodes in both cases with and without heat radiation fins.
FIG. 10 is a property graph showing experimental results about the number of electric discharge times and a degree of wear in cases where the diameter is 2 mm and apical angles of electrode tips are 30, 45 and 60 degrees.
FIG. 11 is a property graph showing experimental results about the number of electric discharge times and a degree of wear in cases where the diameter is 3 mm and apical angles of electrode tips are 45 and 60 degrees.

### DESCRIPTION OF EMBODIMENTS

Exemplary embodiments of the present invention will be described hereinafter with reference to the appended drawings.

### [DESCRIPTION ABOUT STRUCTURE OF OPTICAL FIBER FUSION SPLICER]

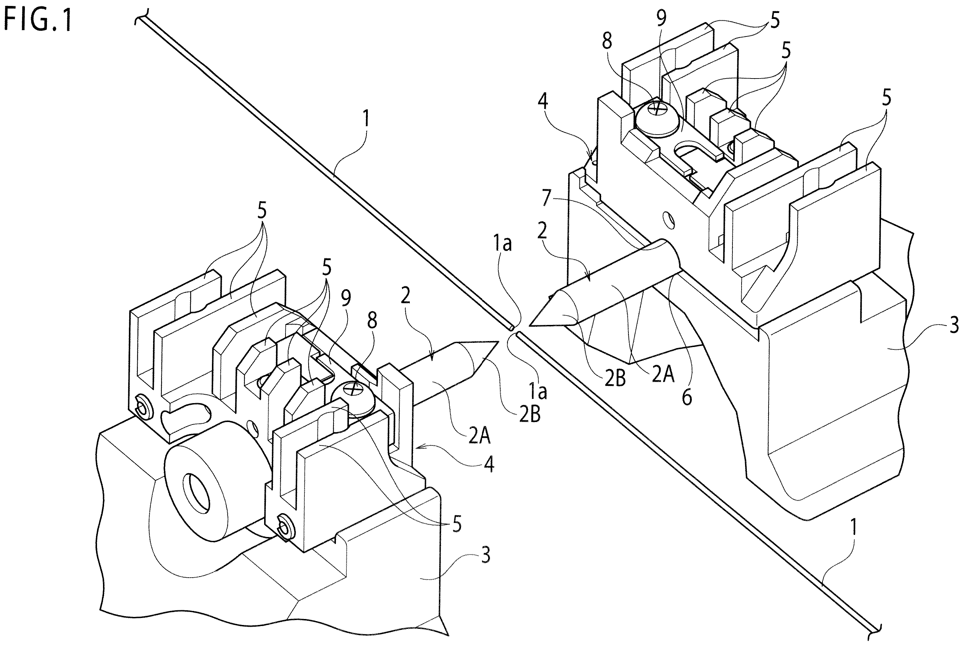

A structure of an optical fiber fusion splicer in accordance with the present embodiment will be first described hereinafter with reference to FIG. 1. The optical fiber fusion splicer of the present embodiment is a device for applying electric discharge to two optical fibers 1 with these end faces 1a butting against each other, which is generated by supplying electricity to a pair of electrodes (anode and cathode) 2, 2, to fuse and splice the end faces 1a of the optical fibers 1. This device is also applicable to purposes of repairing or cleaning end faces, removing a covering thereon, or thermal treatments of optical fibers.

The optical fiber fusion splicer of the present embodiment is, as shown in FIG. 1, comprised of a pair of electrodes 2, 2 disposed opposed to each other with having an optical fiber 1 interposed therebetween, supporting pedestals 3 for respectively supporting the electrodes 2, electrode pressing members 4 for respectively securing the electrodes 2 on the supporting pedestals 3, and heat radiation fins 5 for radiating heat produced by electric discharge generated by supplying electricity to the electrodes 2.

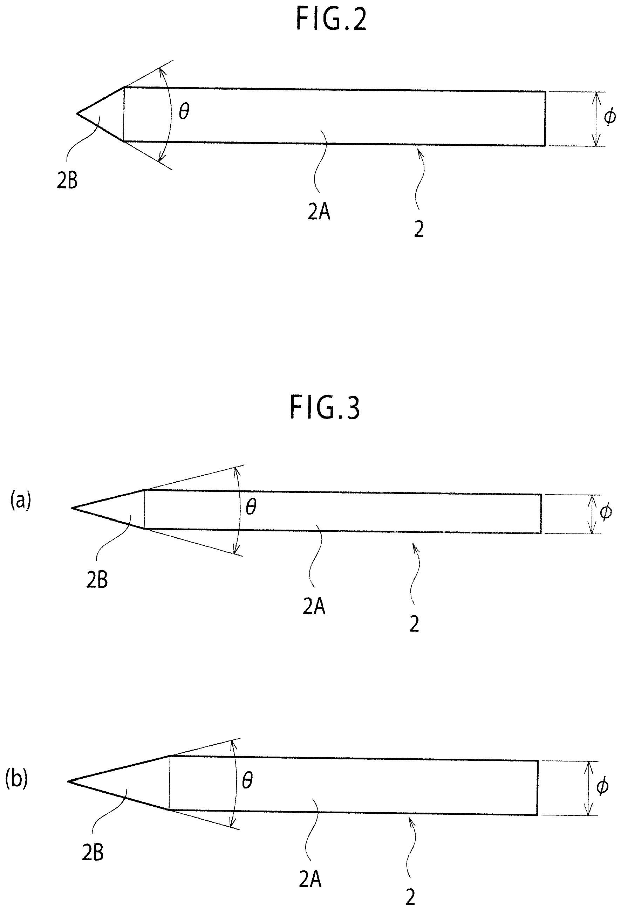

The electrodes 2 are for example made of electrically conductive tungsten or such. Each electrode 2 is preferably, as shown in FIG. 2, formed of a trunk portion 2A of a round bar shape, and an electrode tip portion 2B with a conical tip. Or, the trunk portion may be of a rectangular bar shape, a flat plate shape, or a mass shape, and the tip portion may be a pyramidal shape or any tapered shape. In this embodiment, it is preferable that the diameter Φ of the trunk portion 2A is made to be 3 mm or more and the apical angle θ of the electrode tip portion 2B is made to be 60 degrees or more for reasons described later.

In an electrode 2 of the prior art, in contrast, the diameter Φ of the trunk portion 2A is made to be 2 mm and the apical angle θ of the electrode tip portion 2B is made to be 30 degrees. In a case of fusing and splicing optical fibers 1 of a relatively small diameter, the electrode 2 of the prior art will not give rise to any problem in fusion splicing. In a case of fusing and splicing optical fibers 1 of a relatively large diameter, however, the electrode 2 readily becomes high in temperature because larger electricity is injected. According to studies by the present inventors, this high temperature causes oxidization as well as wear of the electrode tip portion 2B. Thus, in the present embodiment, the diameter of the trunk portion 2A is made larger and the apical angle of the electrode tip portion 2B is made larger, thereby increasing heat capacity of the electrode as a whole. Reasons for making the diameter Φ of the trunk portion 2A be 3 mm or more and the apical angle θ of the electrode tip portion 2B be 60 degrees or more are based on the experimental data as described later.

On each supporting pedestal 3 formed is a lower round groove 6 on which the electrode 2 is secured. The electrode 2 is, as being disposed on the lower round groove 6, disposed on the supporting pedestal 3 with protruding its electrode tip portion 2B toward the optical fiber 1.

The electrode pressing members 4 are for example made of aluminum that is excellent at radiating heat. On a lower face of each electrode pressing member 4 formed is an upper round groove 7 on which the electrode 2 is secured. Each electrode 2 is, as being disposed in between the upper round groove 7 and the lower round groove 6, put in between the electrode pressing member 4 and the supporting pedestal 3, thereby being supported by these members.

On each electrode pressing member 4, a plurality of heat radiation fins 5 is formed. Each heat radiation fin 5 forms a vertical wall shape standing vertically upward and is machined from, and formed in a unitary body with, the electrode pressing member 4. The shape of the heat radiation fin 5 is not limited to the vertical wall shape shown in FIG. 1 and may be any other shape. Further the number of the heat radiation fins 5 may be preferably greater as possible to enable efficient radiation of heat generated by electric discharge.

Further, on the electrode pressing member 4 formed are screw holes (not shown) through which attachment screws 8 are threaded. Each attachment screw 8 has a washer 9 interposed and is then threaded in the electrode pressing member 4.

In the optical fiber fusion splicer as structured in a way as described above, when discharge current is made to pass through the electrodes 2, 2, arc discharge is generated from both the electrode tip portions 2B of the electrodes 2, 2 opposed to each other at a predetermined distance. Two optical fibers 1, 1 disposed perpendicular to the axial direction of the electrodes 2, 2 are fused and spliced together as the arc discharge melts the end faces 1a, 1a.

In the optical fiber fusion splicer, the electrodes 2 are heated up as the electric discharge repeats to splice the optical fibers 1. The heat accumulated in the electrodes 2 is radiated through the heat radiation fins 5 as a unitary body with the electrode pressing members 4. As a result, the electrodes 2 are cooled so that oxidization of the electrode tip portions 2B and wear as well are suppressed.

### [EXAMPLE 1]

In the example 1, with changing diameters Φ of trunk portions 2A and apical angles θ of electrode tip portions 2B of electrodes 2, electric discharge by using the electrodes 2 was repeated and then progress of oxidization states of the electrode tip portions 2B was studied.

An electrode of a sample A was the electrode 2 of the present embodiment shown in FIG. 2, wherein the diameter Φ of the trunk portion 2A was made to be 3 mm and the apical angle θ of the electrode tip portion 2B was made to be 60 degrees.

An electrode of a sample B was an electrode 2 of the prior art shown in FIG. 3(a), wherein the diameter Φ of the trunk portion 2A was made to be 2 mm and the apical angle θ of the electrode tip portion 2B was made to be 30 degrees.

An electrode of a sample C was an electrode 2 of the prior art shown in FIG. 3(b), wherein the diameter Φ of the trunk portion 2A was made to be 3 mm and the apical angle θ of the electrode tip portion 2B was made to be 30 degrees.

The condition of fusion splicing was that the distance between the electrodes was 4 mm, discharge current was 3 mA, and discharge time was 10 seconds. Each electrode A-C was secured on the supporting pedestal 3 by means of the electrode pressing members 4 without heat radiation fins 5.

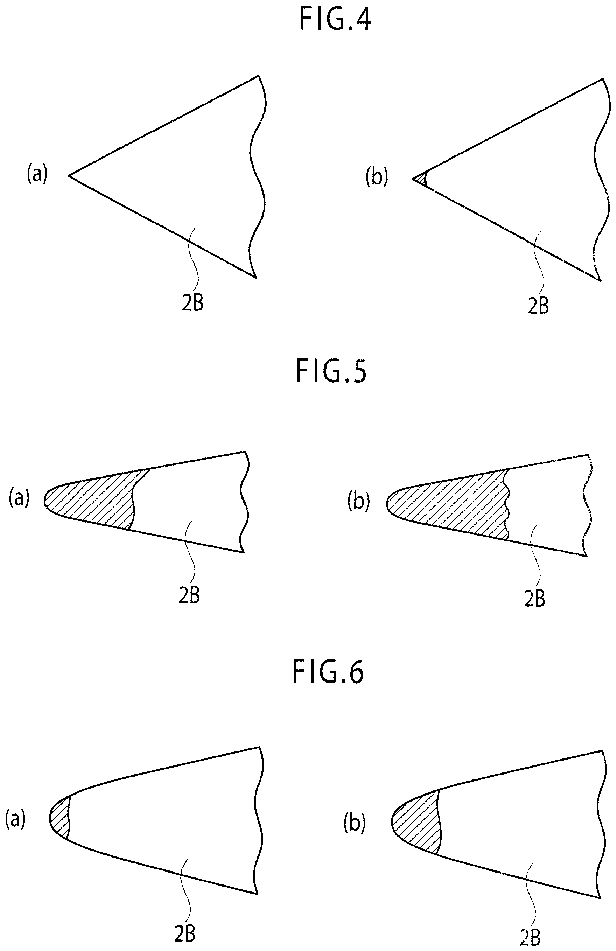

States of oxidization of the electrode tip portions 2B of the electrodes of the samples A-C are shown in FIGs. 4 through 6. Regions with oblique line hatching in these drawings depict oxidized portions. FIG. 4 is the electrode of the sample A, wherein (a) shows a state of the electrode tip portion 2B after 10 times of electric discharge, and (b) shows a state after 50 times. FIG. 5 is the electrode of the sample B, wherein (a) shows a state of the electrode tip portion 2B after 10 times of electric discharge, and (b) shows a state after 50 times. FIG. 6 is the electrode of the sample C, wherein (a) shows a state after 10 times of electric discharge, and (b) shows a state after 50 times.

When reviewing the states of oxidization of the electrode tip portions 2B of FIGs. 4 through 6, it is understood that oxidization is lighter in the samples of 3 mm in diameter Φ of the trunk portions 2A (FIGs. 3, 4 showing the electrode tip portions of the samples A, C) as compared with the sample of 2 mm in diameter Φ of the trunk portion 2A (FIG. 5 showing the electrode tip portion of the sample B). The greater the number of times of electric discharge is, the wider the oxidized region is, while the degree of increase in the oxidized area in those of 3 mm in diameter is smaller than that of 2 mm in diameter.

On the other hand, in regard to the apical angle θ, it is understood that oxidization is lighter in the sample of 60 degrees in apical angle (FIG. 4 showing the electrode tip portion of the sample A) as compared with the samples of 30 degrees in apical angle (FIGs. 5, 6 showing the electrode tip portions of the samples B, C). Like this, the greater the number of times of electric discharge is, the wider the oxidized region is, while the degree of increase in the oxidized area in that of 60 degrees in apical angle is smaller than those of 30 degrees in apical angle.

Further the amount of wear in the electrode of the sample A is smaller than those in the electrodes of the samples B, C. In the samples B, C, wear becomes heavier as the number of times of electric discharge becomes greater. In contrast, in the electrode of the sample A, there is only a small change in the amounts of wear between that exposed to 10 times of electric discharge and that exposed to 50 times.

These experimental results of the example 1 teach us that oxidization of the electrode tip portion 2B can be suppressed as well as wear is suppressed when the diameter Φ of the trunk portion 2A is made larger from 2 mm of the prior art into 3 mm and the apical angle θ of the electrode tip portion 2B is changed from 30 degrees of the prior art into 60 degrees. This is caused by that the heat capacity of the electrode as a whole increases as the diameter of the trunk portion 2A is made larger and the apical angle of the electrode tip portion 2B is made greater.

### [EXAMPLE 2]

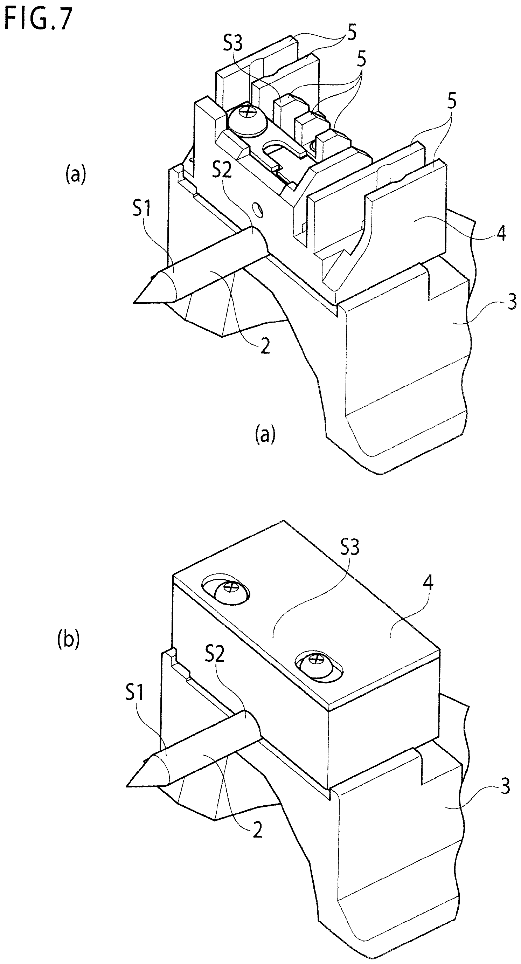

In the example 2, it was studied how temperature of the respective parts of the electrodes changed and electrode tip portions 2B were oxidized depending on whether heat radiation fins 5 were provided or not. FIG. 7(a) shows part subject to temperature measurement in the optical fiber fusion splicer with heat radiation fins, and FIG. 7(b) shows part subject to temperature measurement in the optical fiber fusion splicer without heat radiation fins.

In electrodes 2 used in the experiment, the diameter Φ of the trunk portion 2A was made to be 3 mm, the apical angle θ of the electrode tip portion 2B was made to be 60 degrees. The condition of fusion splicing was that the distance between the electrodes 2 was 4 mm, the discharge current was 5 mA, and the discharge time was 10 seconds. Parts subject to temperature measurement are a tip S1 of the electrode, a root S2 of the electrode, and a part S3 of the electrode pressing member or the heat radiation fins.

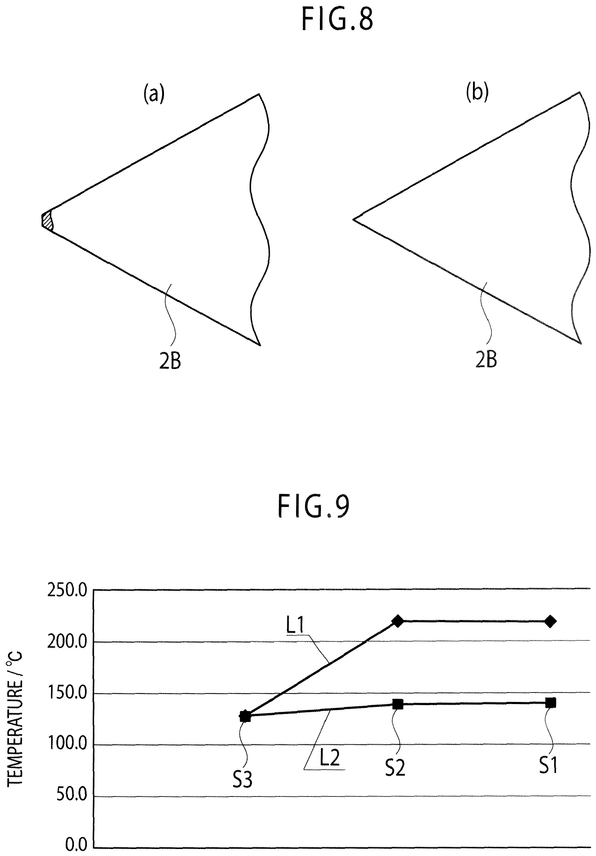

These results are shown in FIG. 9. The line L1 in FIG. 9 is data of temperature measurement at the respective parts of the electrode without the heat radiation fins. The line L2 in FIG. 9 is data of temperature measurement at the respective parts of the electrode with the heat radiation fins.

As being understood from these results, it is understood that the electrode with the heat radiation fins is, at any parts of the electrode, lower in temperature than that without the heat radiation fins. This is caused by that the heat generated by the electric discharge is transmitted from the electrode 2 through the electrode pressing member 4 to the heat radiation fins 5 where the heat is radiated to the exterior. In a case having the heat radiation fins 5, the temperatures of any parts of the electrode are reduced as compared with those without the heat radiation fins.

FIG. 8(a) shows a state of oxidization of the electrode tip portion shown in FIG. 2 in a case where the electrode pressing member without the heat radiation fins is used and the number of times of electric discharge is 10. FIG. 8(b) shows a state of oxidization of the electrode tip portion shown in FIG. 2 in a case where the electrode pressing member with the heat radiation fins is used and the number of times of electric discharge is 10. In these drawings, the regions with oblique hatching depict oxidized portions.

Without the heat radiation fins 5, the electrode tip portion 2B is, as shown in FIG. 8(a), oxidized to be white after 10 times of electric discharge. In contrast, with the heat radiation fins 5, oxidization of the electrode tip portion 2B is not observed as shown in FIG. 8(b) after 10 times of electric discharge.

### [EXAMPLE 3]

In the example 3, with changing diameters Φ of trunk portions 2A and apical angles θ of electrode tip portions 2B of electrodes 2, electric discharge by using the electrodes 2 was repeated and then degrees of wear of the electrode tip portions 2B were studied.

In electrodes of samples D, the diameter Φ of the trunk portions 2A was 2 mm while the apical angles θ of electrode tip portions 2B were made to be 30, 45, and 60 degrees respectively. Further these electrodes of the samples D were secured to the supporting pedestal 3 by means of the electrode pressing member 4 with the heat radiation fins 5 of copper.

In electrodes of samples E, the diameter Φ of the trunk portions 2A was 3 mm while the apical angles θ of electrode tip portions 2B were made to be 45 and 60 degrees respectively. Further these electrodes of the samples E were secured to the supporting pedestal 3 by means of the electrode pressing member 4 with the heat radiation fins 5 of aluminum.

The condition of fusion splicing by using the samples D was that the distance between the electrodes was 3 mm, the discharge power was 100 bits, the pre-fuse time (preliminary discharge time) was 4 seconds, and the discharge time was 12 seconds, and electric discharge was generated with swinging the electrode.

The conditions of fusion splicing by using the samples E were that the distance between the electrodes was 3 mm, the discharge power was 250 bits, the pre-fuse time (preliminary discharge time) was 3 seconds, and the discharge time was 12 seconds, and electric discharge was generated with swinging the electrode.

The discharge power is applied on the basis of numerical values obtained by voltages of the AD converter evenly divided by bits. For example, a voltage of 5V evenly divided by 1024 bits (5V / 1024 x 300 bits = about 1.46 V) is applied to the electrodes.

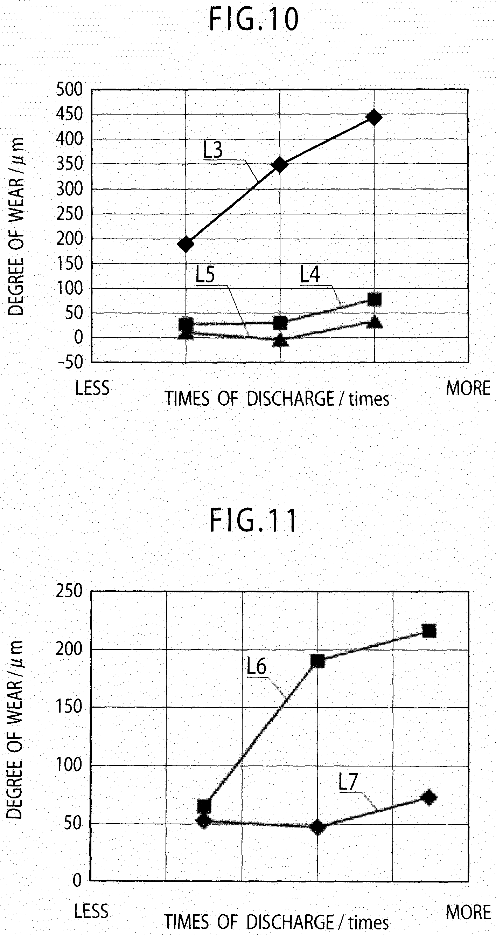

FIG. 10 shows experimental results about the number of electric discharge times and a degree of wear in cases where the electrodes of the samples D were used (the diameter was 2mm and apical angles of electrode tips were 30, 45 and 60 degrees). The line L3 in FIG. 10 corresponds results for the electrodes with the apical angles of 30 degrees, the line L4 corresponds those of 45 degrees, and the line L5 corresponds those of 60 degrees.

FIG. 11 shows experimental results about the number of electric discharge times and a degree of wear in cases where the electrodes of the samples E were used (the diameter was 3 mm and apical angles of electrode tips were 45 and 60 degrees). The line L6 in FIG. 11 corresponds results for the electrodes with the apical angles of 30 degrees, and the line L7 corresponds those of 60 degrees.

Further Table 1 shows degrees of wear and results of judgment in the cases of using the electrodes of the samples D. Table 2 shows degrees of wear and results of judgment in the cases of using the electrodes of the samples E. Cases where the electrodes considerably wear and are thus inapplicable are judged to be "bad", and cases where the degrees of wear are not so considerable and the electrodes are still applicable are judged to be "good".

**Table 1**

| Degree of wear [µm] | | | | | |
|---|---|---|---|---|---|
| Diameter (mm) | Apical angle (degrees) | Times of electric discharge (small) | Times of electric discharge (middle) | Times of electric discharge (large) | judgment |
| 2 | 30 | 189.9 | 345.1 | 440.1 | Bad |
| | 45 | 25 | 28 | 75 | Good |
| | 60 | 11 | -3 | 32 | Good |

**Table 2**

| Degree of wear [µm] | | | | | |
|---|---|---|---|---|---|
| Diameter (mm) | Apical angle (degrees) | Times of electric discharge (small) | Times of electric discharge (middle) | Times of electric discharge (large) | judgment |
| 3 | 45 | 63 | 188 | 215 | Bad |
| | 60 | 51 | 46 | 72 | Good |

It is observed that, in the electrodes of the samples D (2 mm in diameter), wear is more considerable in the case of the apical angle of 30 degrees of the electrode tip portion 2B than that in the cases of the apical angles of 45 degrees and 60 degrees. The degree of wear increases as the number of times of electric discharge increases.

It is also observed that, in the electrodes of the samples E (3 mm in diameter), wear is more considerable in the case of the apical angle of 45 degrees of the electrode tip portion 2B than that in the case of the apical angle of 60 degrees. In particular, the degree of wear increases as the number of times of electric discharge increases.

As being understood from these results, electrodes will hardly wear and the electrode lifetime will be elongated if the diameter Φ of the trunk portion 2A of the electrode 2 is made to be 3 mm or more and the apical angle θ of the electrode tip portion 2B is made to be 60 degrees or more.

### [EFFECTS OF THE PRESENT EMBODIMENT]

According to the studies by the present inventors, it is clarified that the temperature of electrodes gradually increases as electric discharge is repeated, and this temperature increase is a dominant factor in oxidization and wear of electrode tips. The optical fiber fusion splicer of the present embodiment can radiate heat generated at the electrodes 2 through the heat radiation fins 5, thereby suppressing the temperature increase of the electrodes. In accordance with the present invention, consequently, oxidization and wear of the electrode tip can be suppressed and the electrode lifetime can be elongated.

Further in the optical fiber fusion splicer of the present embodiment, by using the electrode 2 in that the diameter Φ of the trunk portion 2A is made to be 3 mm or more, the shape of the electrode tip portion 2B is made to be conical, and the apical angle θ of the electrode tip portion 2B is made to be 60 degrees or more, the heat capacity of the electrodes as a whole is increased so that the temperature increase is suppressed.

### INDUSTRIAL APPLICABILITY

The present invention is applied to an optical fusion splicer for fusing and splicing end faces of two optical fibers.

## Claims

1. A device for applying electric discharge to an optical fiber (1), comprising:
a pair of electrodes (2) having the optical fiber (1) interposed between the electrodes (2) and being opposed to each other;
a pedestal (3) configured to support the electrodes (2); and
a member (4) configured to securely press the electrodes (2) onto the pedestal (3);
**characterized by**
a heat radiation fin (5) provided on the member (4),
wherein each of the electrodes (2) comprises a trunk portion (2A) of 3 mm or more in diameter, and a tip portion (2B) of a conical shape with an apical angle of 60 degrees or more.

2. The device of claim 1, wherein
the member (4) is made of a metal that is excellent at radiating heat, and the heat radiation fin (5) is machined from the member (4) and formed in unitary body with the member (4).

3. The device of claim 1, wherein the pedestal (3) comprises a lower round groove (6) for the electrode (2) and wherein the member (4) comprises an upper round groove (7) for the electrode (2), and the electrode (2) is pressed and secured to the lower round groove (6) and to the upper round groove (7) by the member (4) as disposing the electrode (2) in the lower round groove (6) and the upper round groove (7).

## Patentansprüche

1. Vorrichtung für das Anwenden einer elektrischen Entladung auf eine Lichtleitfaser (1), umfassend:
zwei Elektroden (2), die die Lichtleitfaser (1) haben, die zwischen den Elektroden (2) angeordnet ist, und einander gegenüberliegen;
einen Sockel (3), der dazu eingerichtet ist, die Elektroden (2) zu halten; und
ein Element (4), das dazu eingerichtet ist, die Elektroden (2) sicher auf den Sockel (3) zu drücken;
**gekennzeichnet durch**
eine Wärmeabstrahllamelle (5), die an dem Element (4) vorgesehen ist,
wobei jede der Elektroden (2) einen Rumpfabschnitt (2A) mit einem Durchmesser von 3 mm oder mehr und einen Spitzenabschnitt (2B) einer konischen Form mit einem Scheitelwinkel von 60 Grad oder mehr umfasst.

2. Vorrichtung nach Anspruch 1, bei der
das Element (4) aus einem Metall besteht, das eine exzellente Wärmeabstrahlung hat, und die Wärmeabstrahllamelle (5) aus dem Element (4) ausgearbeitet und in einem einheitlichen Körper mit dem Element (4) ausgebildet ist.

3. Vorrichtung nach Anspruch 1, bei der der Sockel (3) eine untere runde Rille (6) für die Elektrode (2) umfasst und das Element (4) eine obere runde Rille (7) für die Elektrode (2) umfasst und die Elektrode (2) an die untere runde Rille (6) und die obere runde Rille (7) durch das Element (4) gedrückt und dort gehalten wird, wenn die Elektrode (2) in der unteren runden Rille (6) und der oberen runden Rille (7) angeordnet wird.

## Revendications

1. Dispositif permettant d'appliquer une décharge électrique à une fibre optique (1), comprenant :
une paire d'électrodes (2) opposées l'une à l'autre, la fibre optique (1) étant intercalée entre les électrodes (2),
un socle (3) configuré pour supporter les électrodes (2), et
un élément (4) configuré pour comprimer fermement les électrodes (2) sur le socle (3),
**caractérisé par :**
une ailette de rayonnement de chaleur (5) prévue sur l'élément (4),
dans lequel chacune des électrodes (2) comprend une partie formant fût (2A) de diamètre 3 mm ou plus, ainsi qu'une partie formant pointe (2B) de forme conique dont l'angle du sommet vaut 60 degrés ou plus.

2. Dispositif selon la revendication 1, dans lequel l'élément (4) est constitué d'un métal qui présente un excellent rayonnement calorique, et où l'ailette de rayonnement de chaleur (5) est usinée à partir de l'élément (4) et formée dans un corps monolithique avec l'élément (4).

3. Dispositif selon la revendication 1, dans lequel le socle (3) comprend une rainure inférieure arrondie (6) pour l'électrode (2) et dans lequel l'élément (4) comprend une rainure supérieure arrondie (7) pour l'électrode (2), et
l'électrode (2) est comprimée et immobilisée sur la rainure inférieure arrondie (6) et sur la rainure supérieure arrondie (7) par l'élément (4) lorsqu'est déposée l'électrode (2) dans la rainure inférieure arrondie (6) et dans la rainure supérieure arrondie (7).
